# EUROPÄISCHE PATENTSCHRIFT

(11) **EP 1 290 805 B1**
(45) Veröffentlichungstag und Bekanntmachung des Hinweises auf die Patenterteilung: **17.03.2004**
(21) Anmeldenummer: 01956271.9
(22) Anmeldetag: 13.06.2001
(51) Int. Cl.: H04B 1/40, H04B 1/48

(54) **MEHRBAND-MOBILFUNKENDGERÄT UND ANTENNEN-SCHALTEINRICHTUNG FÜR EIN SOLCHES**
MULTIBAND MOBILE RADIO TERMINAL AND ANTENNA SWITCHING DEVICE FOR SUCH A TERMINAL
APPAREIL DE RADIOTELEPHONIE MOBILE MULTIBANDE ET CIRCUIT D'ANTENNES Y RELATIF

(30) Priorität: 15.06.2000 DE 10029419
(43) Veröffentlichungstag der Anmeldung: 12.03.2003
(73) Patentinhaber: SIEMENS AKTIENGESELLSCHAFT, 80333 München (DE)
(72) Erfinder: MAMIER, Lothar, 81241 München (DE); ECKERT, Rainer, 81677 München (DE)
(86) Internationale Anmeldenummer: PCT/DE2001/002212
(87) Internationale Veröffentlichungsnummer: WO 2001/097392

(56) Entgegenhaltungen:
- EP-A- 0 856 952
- EP-A- 0 921 642
- WO-A-00/19627
- GB-A- 2 346 049

## Beschreibung

Die Erfindung betrifft ein Mehrband-Mobilfunkendgerät, insbesondere Tripleband-Mobiltelefon, nach dem Oberbegriff des Anspruchs 1. Sie betrifft weiterhin eine Antennen-Schalteinrichtung zum Einsatz bei einem solchen Mobilfunkendgerät.

In den ersten Jahren der Mobilfunktechnik waren die Endgeräte (Mobiltelefone bzw. "Handys") jeweils ausschließlich für eines der entstehenden Mobilfunksysteme, d. h. für ein Sende-/ Empfangsband, ausgelegt. Mit der zunehmenden Globalisierung des Geschäftslebens wie auch des gesellschaftlichen Lebens einerseits und der fortschreitenden Verknüpfung der Mobilfunknetze mit den leitungsgebundenen Telekommunikationsnetzen (Festnetzen) und den Datennetzen (speziell dem Internet) verstärkte sich der Bedarf nach Endgeräten, die in verschiedenen Mobilfunknetzen einsetzbar sind. Mit der fortschreitenden Miniaturisierung, Integration und Kostenreduktion der Komponenten von Mobilfunk-Endgeräten wurde vor einigen Jahren die Realisierung von für zwei Sende-/Empfangsbändern geeigneten Mobiltelefonen (Dualband-Handys) möglich, und seit kurzem ist ein Markt für Tripleband-Mobiltelefone, also für drei Sende-/Empfangsbänder ausgelegte Mobilfunk-Endgeräte, im Entstehen begriffen.

Die derzeit auf dem Markt befindlichen GSM-Tripleband-Mobiltelefone weisen Antennenein- und -ausgangsschaltungen mit drei getrennten Empfangszügen auf, die jeweils mindestens aus einem Oberflächenwellenfilter und einem rauscharmen Eingangsverstärker (LNA = Low Noice Amplifier) mit Komponenten für die Eingangs- und Ausgangsanpassung bestehen. Die Schaltungen haben einen Schalter gemeinsam, der die Auswahl zwischen Senden und Empfangen trifft und die einzelnen Empfangssignalzweige auf die Antennen führt (Diplexer).

Es ist auch ein sogenanntes Frontendmodul entwickelt worden, welches den Antennenschalter und Diplexer und in einer neueren Ausführung auch die SAW-Empfangsfilter aufweist. In diesem Modul ist bereits eine Mehrzahl von Funktionen integriert, und es hat gegenüber dem herkömmlichen Aufbau wesentliche Vorteile. Insbesondere erbringt es eine Platzersparnis im Endgerät und eine Reduzierung der Bestückungskosten.

Ein Nachteil dieses Frontendmoduls besteht darin, daß bei inaktiven Steuereingängen (Steuerpins) sämtliche Empfangszüge aktiv sind. Dieser Umstand führt zu einem unerwünschten "Mehrfachempfang", der derzeit dadurch unterbunden wird, daß nur dem Eingangsverstärker des gewünschten Empfangssignalzweiges eine Versorgungsspannung zugeführt wird. Nur dieser LNA kann somit das Empfangssignal passieren, während die anderen beiden Eingangsverstärker in den verbleibenden Eingangssignalzweigen ohne Versorgungsspannung sind und das an ihnen anliegende Signal sperren.

Aus der Druckschrift WO00/19627 A ist ein Kommunikationssystem zum Übertragen von Hochfrequenzsignalen einer Vielzahl von Übertragungsstandards über eine gemeinsame Antenne bekannt. Das Kommunikationssystem ist für mindestens drei Sende-/Empfangsbänder ausgelegt und weist eine Antennenein- und ausgangsschaltung mit einer mit einer gemeinsamen Antenne verbundene Antennen-Schalteinrichtung auf. Das Kommuniaktionssystem ist aus einer Vielzahl von einzelnen Modulen aufgebaut.

Der Erfindung liegt die Aufgabe zugrunde, ein verbessertes Mehrband-Mobilfunkendgerät der gattungsgemäßen Art anzugeben, bei dem der Platzbedarf für die Antennenein-/-ausgangsschaltung weiter reduziert ist und die Bestückungskosten verringert sind.

Diese Aufgabe wird durch ein Mehrband-Mobilfunkendgerät mit den Merkmalen des Anspruchs 1 gelöst.

Die Erfindung fußt auf der Überlegung, daß ein Empfangszug im Bereich des Eingangsverstärkers für das Sende-/Empfangsband GSM 1800 im Grunde breitbandig genug ist, um auch das Sende-/Empfangsband GSM 1900 unterstützen zu können. Hieraus ergibt sich der grundlegende Gedanke, einen der bisherigen separaten Empfangszweige als gemeinsamen Empfangszweig für zwei Sende-/ Empfangsbänder auszulegen und somit für beide Bänder auch nur einen LNA mit den Komponenten für die Eingangs- und Ausgangsanpassung vorzusehen.

Hierbei ist zu beachten, daß der Einsatz nur eines LNA für GSM 1800 und GSM 1900 beim bestehenden Konzept dazu führen würde, daß z. B. Störer im Bereich GSM 1900 bei gewünschtem GSM 1800-Empfang ungehindert durchdringen könnten und umgekehrt, da ja sämtliche Empfangszüge der erwähnten Antennenein- und ausgangsschaltung bzw. des Frontendmoduls aktiv sind.

Die Erfindung schließt daher in einer zweckmäßigen Ausführung das Vorsehen eines Frontendmoduls mit einem Steuereingang zur Umschaltung eines der Empfangssignalzweige zwischen zwei Sende-/Empfangsbändern, insbesondere GSM 1800 und GSM 1900, zur Aktivierung nur eines Bereiches und somit zur Ausschaltung von Störern aus dem anderen Bereich ein.

In der derzeit in der Praxis bedeutsamsten Ausführung ist das Mehrband-Mobilfunkendgerät neben den erwähnten Bändern GSM 1800 und GSM 1900 für das dritte Sende-/Empfangsband E-GSM 900 ausgelegt. Grundsätzlich ist der Gedanke der Erfindung aber auch auf andere Konstellationen von Sende-/Empfangsbändern anwendbar.

Das erwähnte Frontendmodul umfaßt einen Antennenschalter, eine Diplexerschaltung und jeweils eine Ein- und Ausgangs-Anpaßschaltung für jedes Sende-/ Empfangsband, wobei die letzteren insbesondere jeweils ein Oberflächenwellenfilter aufweisen. Zwei Steuersignaleingänge, die mit als solchen bereits vorhandenen Steuerleitungen verbunden sind, dienen zum Empfang von Steuersignalen zur Umschaltung zwischen den zwei über einen gemeinsamen Empfangssignalzweig geführten Sende-/ sich der grundlegende Gedanke, einen der bisherigen separaten Empfangszweige als gemeinsamen Empfangszweig für zwei Sende-/ Empfangsbänder auszulegen und somit für beide Bänder auch nur einen LNA mit den Komponenten für die Eingangs- und Ausgangsanpassung vorzusehen.

Hierbei ist zu beachten, daß der Einsatz nur eines LNA für GSM 1800 und GSM 1900 beim bestehenden Konzept dazu führen würde, daß z. B. Störer im Bereich GSM 1900 bei gewünschtem GSM 1800-Empfang ungehindert durchdringen könnten und umgekehrt, da ja sämtliche Empfangszüge der erwähnten Antennenein- und ausgangsschaltung bzw. des Frontendmoduls aktiv sind.

Die Erfindung schließt daher in einer zweckmäßigen Ausführung das Vorsehen eines Frontendmoduls mit einem Steuereingang zur Umschaltung eines der Empfangssignalzweige zwischen zwei Sende-/Empfangsbändern, insbesondere GSM 1800 und GSM 1900, zur Aktivierung nur eines Bereiches und somit zur Ausschaltung von Störern aus dem anderen Bereich ein.

In der derzeit in der Praxis bedeutsamsten Ausführung ist das Mehrband-Mobilfunkendgerät neben den erwähnten Bändern GSM 1800 und GSM 1900 für das dritte Sende-/Empfangsband E-GSM 900 ausgelegt. Grundsätzlich ist der Gedanke der Erfindung aber auch auf andere Konstellationen von Sende-/Empfangsbändern anwendbar.

In einer bevorzugten Ausführung umfaßt das erwähnte Frontendmodul einen Antennenschalter, eine Diplexerschaltung und jeweils eine Ein- und Ausgangs-Anpaßschaltung für jedes Sende-/ Empfangsband, wobei die letzteren insbesondere jeweils ein Oberflächenwellenfilter aufweisen. Zwei Steuersignaleingänge, die mit als solchen bereits vorhandenen Steuerleitungen verbunden sind, dienen zum Empfang von Steuersignalen zur Umschaltung zwischen den zwei über einen gemeinsamen Empfangssignalzweig geführten Sende-/ Empfangsbändern. Die Steuersignaleingänge sind jeweils mit einer Schalteinrichtung zur wahlweisen Verbindung der Eingangsanpaßschaltungen für eines der Sende-/Empfangsbänder mit Masse verbunden.

Die Auswahl des entsprechenden Empfangsbandes erfolgt bevorzugt mit PIN-Dioden-Schaltungen.

In einer ersten zweckmäßigen Ausführung ist eine solche jeweils mit der Ausgangsseite eines Oberflächenwellenfilters verbunden und stellt in einem ersten Steuerzustand eine Verbindung desselben mit dem Empfangssignalzweig und in einem zweiten Steuerzustand eine Verbindung mit Masse her. Im ersten Steuerzustand wird also das entsprechende bandselektierte Empfangssignal in den Empfangssignalzweig geleitet, während es im zweiten Steuerzustand gegen Masse abgeleitet wird. Die Betätigung der PIN-Schaltdiode erfolgt über eine zugehörige steuerbare Vorspannungs(Bias)-Zuführung.

In einer hierzu alternativen Ausführung sind die PIN-Dioden-Schaltungen mit den Ausgangs-Anpaßschaltungen zur Ausbildung schaltbarer Ausgangs-Anpaßschaltungen integriert. Auch hierbei wird in einem ersten Steuerzustand das jeweilige bandselektierte Empfangssignal dem gemeinsamen Empfangssignalzweig zugeführt, in einem zweiten Steuerzustand jedoch gegen Masse abgeleitet.

Mit der vorgeschlagenen Lösung werden mehrere passive Bauelemente und mindestens ein aktiver Baustein, nämlich der erwähnte Eingangsverstärker (LNA), und somit der entsprechende Montageraum sowie die mit deren Montage verbundenen Bestückungskosten eingespart. Dies trägt zu einer weiteren Miniaturisierung und Kostenreduktion des Frontends bei. Mit den letztgenannten Ausführungsformen wird zudem erreicht, daß beim Empfang keine zusätzliche Dämpfung im Sendeweg entsteht.

Vorteile und Zweckmäßigkeiten der Erfindung ergeben sich im übrigen aus den Unteransprüchen sowie der nachfolgenden Beschreibung bevorzugter Ausführungsformen der Erfindung im Vergleich zum Stand der Technik anhand der Figuren. Von diesen zeigen:
Fig. 1 ein Blockschaltbild des Antennenein- und -ausgangsbereiches eines herkömmlichen GSM-Tripleband-Mobiltelefons,
Fig. 2 ein Blockschaltbild eines GSM-Tripleband-Mobiltelefons mit einem integrierten Frontendmodul,
Fig. 3 ein Blockschaltbild eines GSM-Tripleband-Mobiltelefons gemäß einer Ausführungsform der Erfindung,
Fig. 4 ein Blockschaltbild einer ersten Ausführung des Frontendmoduls bei dem GSM-Mobiltelefon nach Fig. 3 und
Fig. 5 ein Blockschaltbild einer zweiten Ausführung des Frontendmoduls für das GSM-Mobiltelefon nach Fig. 3.

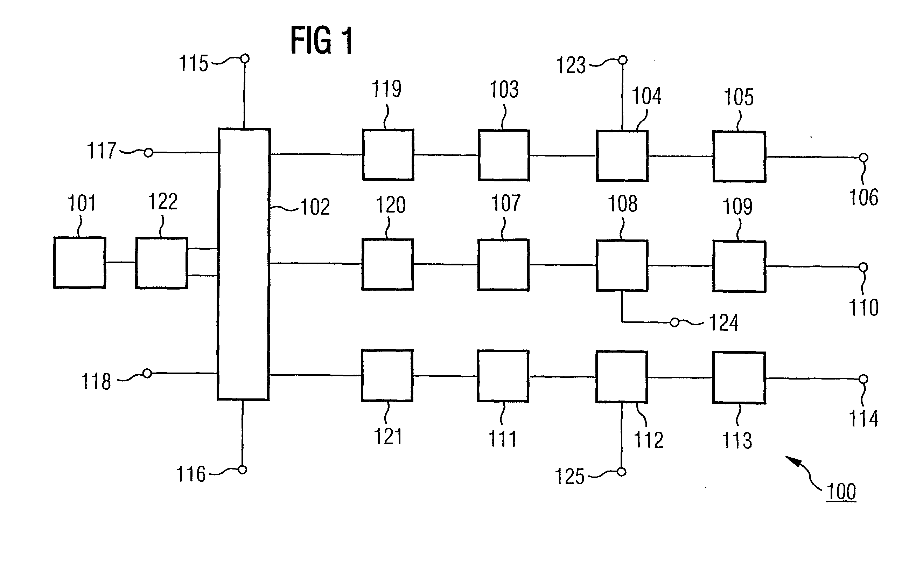

Fig. 1 zeigt einen im Zusammenhang mit der Erläuterung der Erfindung wesentlichen Teil eines herkömmlichen GSM-Tripleband-Mobiltelefons, nämlich den Bereich einer Antenneneinund -ausgangsschaltung 100 zur Verbindung der Sende- bzw. Empfangsstufen mit einer Antenne 101. Dieses Mobiltelefon ist für Mehrband-Betrieb in den Sende-/Empfangsbändern E-GSM 900, GSM 1800 und GSM 1900 ausgelegt.

Die Antenne 101 ist über einen Diplexer 122 und einen Antennenschalter 102 mit zwei Sendereingängen 115, 116 zunächst mit (nicht dargestellten) Sendestufen verbunden, und zwei Sender-Steuerpins 117, 118 dienen zur Umschaltung auf Sendebetrieb in jeweils einem der Sendebänder. Der Eingang 115 ist der Sender-Eingang für E-GSM 900, der Eingang 116 der Sender-Eingang für GSM 1800/GSM 1900, der Sender-Steuerpin 117 ist derjenige für E-GSM 900, und der Steuerpin 118 ist derjenige für GSM 1800/GSM 1900.

Weiterhin ist die Antennenein- und -ausgangsschaltung mit drei Empfängereingängen 106, 110 und 114 verbunden, nämlich dem RX-Eingang E-GSM 900, dem RX-Eingang GSM 1800 und dem RX-Eingang GSM 1900. Vom Antennenschalter 102 zu diesen Empfängereingängen verlaufen vollkommen separate Empfangszweige, die jeweils ein Front-SAW-Filter 119, 120 bzw. 121, ein Eingangsanpaßnetzwerk 103, 107 bzw. 111 für einen jeweils nachgeschalteten rauscharmen Eingangsverstärker (LNA) 104, 108 bzw. 112 und ein Ausgangsanpaßnetzwerk 105, 109 bzw. 113 für den jeweiligen LNA umfassen. Den Eingangsverstärkern 104 (E-GSM 900 LNA), 108 (GSM 1800 LNA) und 112 (GSM 1900 LNA) ist jeweils eine schaltbare Versorgungsspannung 123, 124 bzw. 125 zugeordnet.

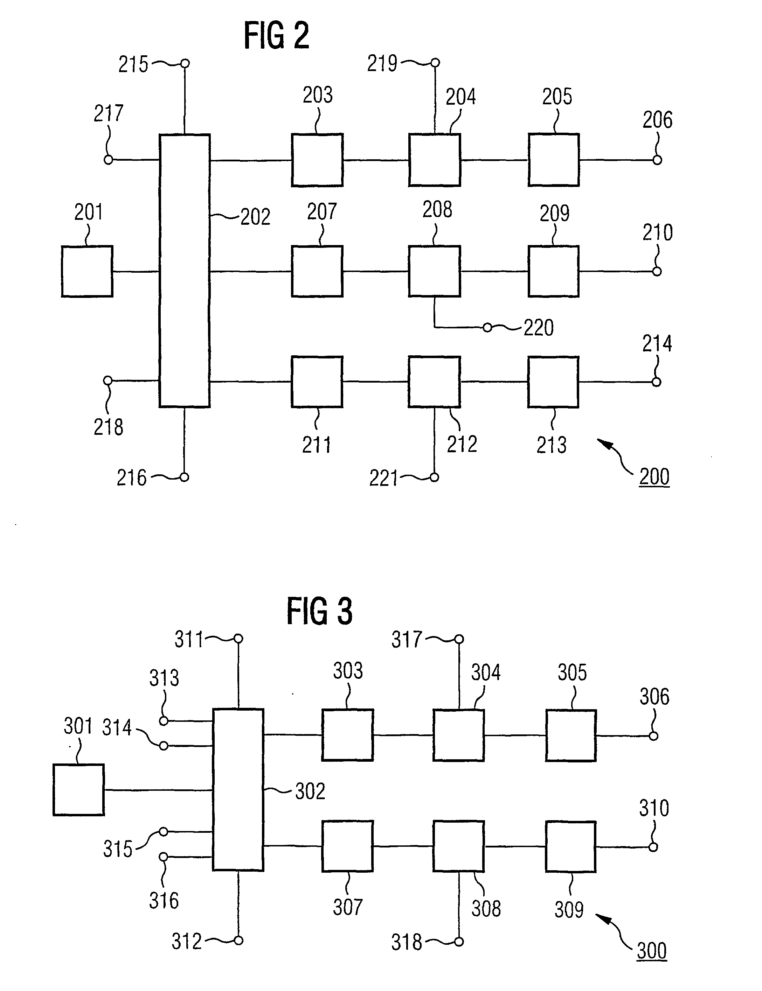

Fig. 2 zeigt einen gegenüber der konventionellen Anordnung nach Fig. 1 vereinfachten Aufbau einer Antennenein- und - ausgangsschaltung 200, bei dem mit einer Antenne 201 ein integriertes Frontendmodul 202 verbunden ist, in dem bereits ein Teil der Funktionen von Einzelkomponenten der vorstehend beschriebenen Anordnung implementiert ist. Insbesondere integriert das Frontendmodul 202 einen Antennenschalter, einen Diplexer und die Front-SAW-Filter für die einzelnen Empfangsbänder. Diese Komponenten tauchen daher in der Anordnung nach Fig. 2 nicht mehr als separate Komponenten auf.

Im übrigen stimmt der Aufbau der Antennenein- und -ausgangsschaltung 200 aber mit demjenigen der vorstehend beschriebenen Schaltung 100 nach Fig. 1 überein. Insoweit wurden auch korrespondierende Bezugsziffern verwendet, und die entsprechenden Komponenten werden hier nicht nochmals erläutert. (Es ist lediglich darauf hinzuweisen, daß die Bezugsziffern 219, 220 und 221 für die schaltbaren Versorgungsspannungen der LNAs nicht der Bezugsziffern-Systematik der Fig. 1 folgen.) In Fig. 3 ist eine Antennenein- und -ausgangsschaltung 300 gemäß einer Ausführungsform der Erfindung in Form eines Blockschaltbildes in Anlehnung an die Darstellung von Fig. 1 und 2 gezeigt. Senderseitig gibt es keine Unterschiede zur Anordnung nach Fig. 2: Eine Antenne 301 ist über ein Frontendmodul 302 mit Sendereingängen 311, 312 mit den Sendestufen verbunden, und die Sendeband-Umschaltung erfolgt über Sender-Steuerpins 313 und 316. Auch hinsichtlich des Vorhandenseins eines eigenen Empfangszweiges für E-GSM 900, der das Frontendmodul 302 über ein Eingangsanpaßnetzwerk 303, einen Eingangsverstärker (E-GSM 900 LNA) 304 mit schaltbarer Versorgungsspannung 317 und ein Ausgangsanpaßnetzwerk 305 für diesen mit einem Empfängereingang 306 verbindet, besteht Übereinstimmung mit der Anordnung 200 nach Fig. 2.

Der wesentliche Unterschied besteht darin, daß das Frontendmodul 302 über einen gemeinsamen Empfangszweig mit einem breitbandigen Eingangsanpaßnetzwerk 307, einem für die Empfangsbänder GSM 1800/GSM 1900 gemeinsam ausgelegten Eingangsverstärker (LNA) 308 mit schaltbarer Versorgungsspannung 318 und einem breitbandigen Ausgangsanpaßnetzwerk 309 für diesen mit einem kombinierten Empfängereingang 310 für GSM 1800/GSM 1900 verbunden ist und am Frontendmodul zwei zusätzliche Steuerpins 314 für GSM 1800-Empfang und 315 für GSM 1900-Empfang vorgesehen sind. Mit dieser Anordnung wird gegenüber der Anordnung nach Fig. 1 der Platz von sieben passiven Elementen und einem aktiven Baustein, nämlich einem LNA, und auch der entsprechende Bestückungsaufwand eingespart. Die Empfangsbandauswahl erfolgt bei der Schaltung 300 direkt im Frontendmodul, wobei zur Steuerung die schon bei konventionellen Anordnungen genutzten Steuerleitungen eingesetzt werden.

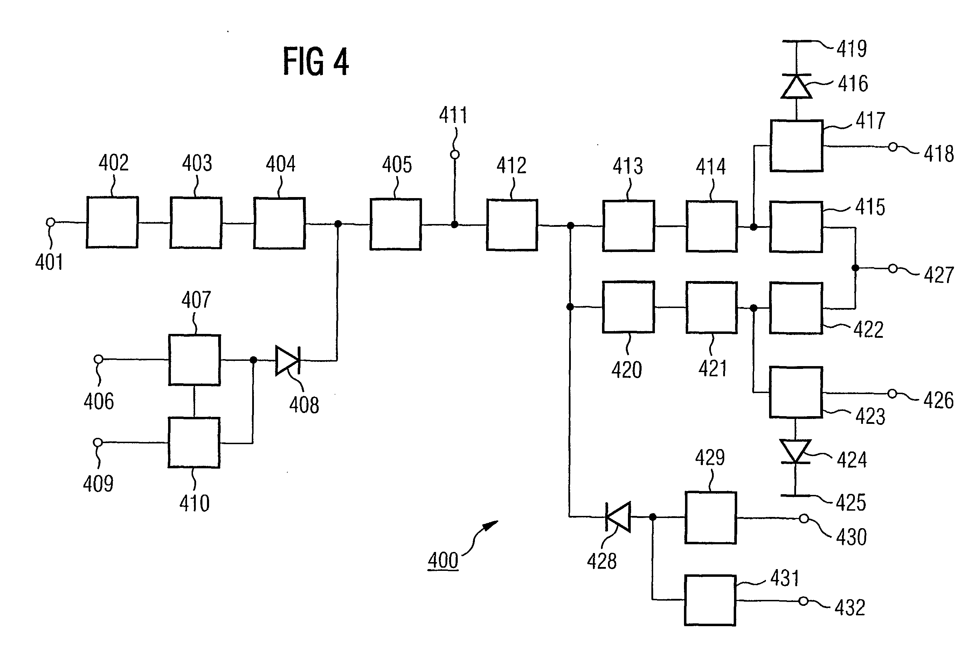

In Fig. 4 ist eine erste Aufbauvariante eines neuartigen Frontendmoduls 400 dargestellt, das funktionell dem Frontendmodul 302 aus Fig. 3 entspricht.

Bei diesem Frontendmodul 400 ist in einem ersten internen Empfangssignalzweig ein Empfänger-Ausgang 401 über ein Ausgangsanpaßnetzwerk 402 eines SAW-Filters 403, ein diesem zugeordnetes Eingangsanpaßnetzwerk 404 und einen ersten Teil 405 einer Diplexerschaltung mit einem Antennenanschluß 411 verbunden. Diese Komponenten bilden den internen Empfangssignalzweig für das Band E-GSM 900. Ein Sender-Eingang 406 mit zugeordnetem Anpaßnetzwerk 407 ist über eine erste PIN-Schaltdiode 408 mit einer Bias-Zuführung 410, welche über einen Sender-Steuerpin 409 angesteuert wird, ebenfalls mit dem Eingang des ersten Teils 405 des Diplexers und über diesen mit dem Antennenanschluß 411 verbunden. Dieser Zweig bildet den internen Sendesignalzweig für das Sendeband E-GSM 900. Der interne Sendesignalzweig für GSM 1800 und GSM 1900 ist analog aufgebaut und umfaßt einen (gemeinsamen) Sender-Eingang 430 für GSM 1800/GSM 1900, ein diesem nachgeschaltetes Sender-Anpaßnetzwerk 429, eine PIN-Schaltdiode 428 für TX GSM 1800/GSM 1900 mit zugeordneter Bias-Zuführung 431, die über einen Steuerpin 432 angesteuert wird, und einen zweiten Teil 412 der bereits erwähnten Diplexerschaltung.

Zur Verbindung des Antennenanschlusses 411 mit dem gemeinsamen externen Empfangssignalzweig (über einen Empfänger-Ausgang 427) sind zwei getrennte interne Empfangssignalzweige vorgesehen, die in den zweiten Teil 412 der Diplexerschaltung münden. Der erste umfaßt ein Eingangsanpaßnetzwerk 413, ein SAW-Filter 414 und ein Ausgangsanpaßnetzwerk 415 für GSM 1800, und der zweite ein Eingangsanpaßnetzwerk 420, ein SAW-Filter 421 und ein Ausgangsanpaßnetzwerk 422 für GSM 1900.

Zwischen dem SAW-Filter 414 und das Ausgangsanpaßnetzwerk 415 im ersten erwähnten Signalzweig sowie in analoger Weise zwischen dem SAW-Filter 421 und dem Ausgangsanpaßnetzwerk 422 im zweiten Signalzweig ist ein Abzweig nach Masse 419 bzw. 425 vorgesehen, in dem eine PIN-Schaltdiode 416 bzw. 424 vorgesehen ist. Die PIN-Schaltdioden 416 bzw. 424 werden über eine Bias-Zuführung 417 bzw. 423, die über jeweils einen Empfänger-Steuerpin 418 bzw. 426 angesteuert wird, vorgespannt und leiten je nach Steuerzustand das jeweilige bandselektierte Empfangssignal im ersten oder zweiten Signalzweig nach Masse ab. Hierdurch wird die interne Empfangsbandauswahl realisiert.

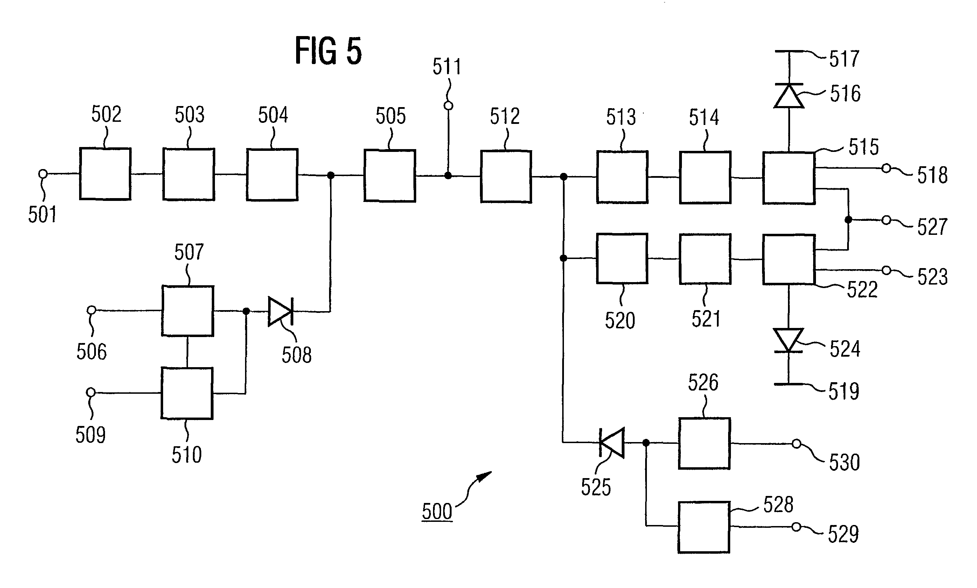

In Fig. 5 ist ein gegenüber der Ausführung nach Fig. 4 modifiziertes Frontendmodul 500 in zu Fig. 4 analoger Darstellung gezeigt. Der Aufbau stimmt weitgehend überein, und weitgehend wurden auch korrespondierende Bezugsziffern verwendet und die Beschreibung der entsprechenden Komponenten wird hier nicht wiederholt. Der wesentliche Unterschied besteht darin, daß an die Stelle des schaltbaren Abzweigs zwischen dem jeweiligen SAW-Filter und Ausgangsanpaßnetzwerk im ersten und zweiten internen Empfangssignalzweig ein schaltbares Ausgangsanpaßnetzwerk 515 bzw. 522 tritt, welches direkt über Empfänger-Steuerpins 518 bzw. 523 angesteuert wird und jeweils über eine PIN-Schaltdiode 516 bzw. 524 mit Masseanschlüssen 517 bzw. 519 verbunden ist.

Dadurch kann zum Beispiel bei gewünschtem GSM 1800-Empfang die schaltbare Anpaßanordnung als Ausgangsanpassung für das jeweilige SAW-Filter dienen, wobei die zugehörige PIN-Schaltdiode gesperrt ist. Im Empfangssignalzweig für das zu sperrende Band GSM 1900 wird die zugehörige schaltbare Anpaßanordnung in Art eines "Leerlauftransformators" betrieben, indem die zugehörige PIN-Schaltdiode im Durchlaßmodus betrieben wird. Durch die PIN-Schaltdioden 516 bzw. 524 kann also zwischen den Zuständen (1) Ausgangsanpassung für das SAW-Filter und (2) "Leerlauftransformator" für die zu sperrende Frequenz geschaltet werden.

Die Ausführung der Erfindung ist nicht auf die oben beschriebenen konkreten Beispiele beschränkt, sondern ebenso in einer Vielzahl von Abwandlungen möglich, die im Rahmen fachgemäßen Handelns liegen.

## Patentansprüche

1. Mehrband-Mobilfunkendgerät, insbesondere Tripleband-Mobiltelefon, das für mindestens drei Sende-/Empfangsbänder ausgelegt ist, mit einer Antennenein- und -ausgangsschaltung (100; 200; 300), die eine mit einer gemeinsamen Antenne (301) verbundene Antennen-Schalteinrichtung (302; 400; 500) und eine von dieser ausgehende Mehrzahl von Empfangssignalzweigen aufweist, in denen jeweils ein rauscharmer Eingangsverstärker (304, 308) mit einer Eingangs- und/oder Ausgangs-Anpaßschaltung (303, 305, 307, 309) vorgesehen ist, wobei die Anzahl der Empfangssignalzweige und somit Eingangsverstärker kleiner ist als die Anzahl der Sende-/Empfangsbänder, für die das Mehrband-Mobilfunkendgerät ausgelegt ist,
**dadurch gekennzeichnet, dass**
die Antennen-Schalteinrichtung (302; 400; 500) durch ein Frontendmodul aufweisend zwei Steuersignaleingänge (314, 315; 418, 426; 518, 523) zum Empfang von Steuersignalen zur Umschaltung eines der Empfangssignalzweige zwischen zwei Sende-/Empfangsbändern, einen Antennenschalter bzw. eine Diplexerschaltung (405/412; 505/512) und jeweils eine Einund Ausgangs-Anpassschaltung (402, 403, 404, 413, 414, 415, 420, 421, 422; 502, 503, 504, 513, 514, 515, 520, 521, 522) für jedes Sende-/Empfangsband, die insbesondere einen Oberflächenwellenfilter (403, 414, 421; 503, 514, 521) aufweist, gebildet ist, wobei die Steuersignaleingänge jeweils mit einer Schalteinrichtung (416, 423; 515, 516, 522, 524) zur wahlweisen Verbindung der Oberflächenwellenfilter (414, 421) oder Ausgangsanpassschaltungen (515, 522) für eines der Sende-/Empfangsbänder mit Masse (419, 425; 517, 519) verbunden sind.

2. Mehrband-Mobilfunkendgerät nach Anspruch 1,
**gekennzeichnet durch**
die Auslegung für die Sende-/Empfangsbänder E-GSM 900, GSM 1800 und GSM 1900.

3. Mehrband-Mobilfunkendgerät nach einem der vorhergehenden Ansprüche ,
**dadurch gekennzeichnet, daß**
die Schalteinrichtungen (416, 423; 516, 524) als PIN-Dioden-Schaltungen ausgebildet sind.

4. Mehrband-Mobilfunkendgerät nach Anspruch 3,
**dadurch gekennzeichnet, daß**
die PIN-Dioden-Schaltungen (416, 423) in einem ersten Steuerzustand die Ausgangsseite des jeweiligen Oberflächenwellenfilters (414, 421) mit dem Empfangssignalzweig und in einem zweiten Steuerzustand mit Masse (419, 423) verbinden derart, daß im ersten Steuerzustand das jeweilige bandselektierte Empfangssignal dem gemeinsamen Empfangssignalzweig zugeführt und im zweiten Steuerzustand gegen Masse abgeleitet wird.

5. Mehrband-Mobilfunkendgerät nach Anspruch 3,
**dadurch gekennzeichnet, daß**
die PIN-Dioden-Schaltungen (515, 516, 522, 524) als schaltbare Ausgangs-Anpaßschaltungen (512, 522) ausgebildet sind, die in einem ersten Steuerzustand das jeweilige bandselektierte Empfangssignal dem gemeinsamen Empfangssignalzweig zuführen und in einem zweiten Steuerzustand gegen Masse (517, 519) ableiten.

6. Mehrband-Mobilfunkendgerät nach einem der vorhergehenden Ansprüche,
**dadurch gekennzeichnet, daß**
die Eingangsverstärker und/oder Abschnitte einer Endstufenregelung, insbesondere einschließlich Kopplern, in das Frontendmodul integriert sind.

7. Mehrband-Mobilfunkendgerät mit einer Antennen-Schalteinrichtung nach einem der vorangehenden Ansprüche, **gekennzeichnet durch**
die Ausbildung als Frontendmodul (302; 400; 500) mit einem Steuereingang (314, 315; 418, 426; 518, 523) zur Umschaltung eines der Empfangssignalzweige zwischen zwei Sende-/Empfangsbändern, insbesondere GSM 1800 und GSM 1900.

8. Mehrband-Mobilfunkendgerät nach Anspruch 7,
**gekennzeichnet durch**
einen Antennenschalter bzw. eine Diplexerschaltung (405/412; 505/512) und jeweils eine Ein- und Ausgangs-Anpaßschaltung (402, 403, 404, 413, 414, 415, 420, 421, 422; 502, 503, 504, 513, 514, 515, 520, 521, 522) für jedes Sende-/Empfangsband, die insbesondere ein Oberflächenwellenfilter (403, 414, 421; 503, 514, 521) aufweist.

## Claims

1. Multiband mobile radio terminal, in particular a triple-band mobile telephone, which is designed for at least three transmit/receive bands, with an antenna input and output circuit (100; 200; 300), which has an antenna switching device (302; 400; 500) connected to a common antenna (301) and a plurality of receive signal branches emanating from this, in each of which is provided a low-noise input amplifier (304, 308) having an input and/or output matching circuit (303, 305, 307, 309), whereby the number of receive signal branches and thus input amplifiers is less than the number of transmit/receive bands for which the multiband mobile radio terminal is designed,
**characterised in that**
the antenna switching device (302; 400; 500) is formed by a front-end module comprising two control signal inputs (314, 315; 418, 426; 518, 523) for receiving control signals in order to switch over one of the receive signal branches between two transmit/receive bands, an antenna switch or a diplexer circuit (405/412; 505/512) and in each case an input and output matching circuit (402, 403, 404, 413, 414, 415, 420, 421, 422; 502, 503, 504, 513, 514, 515, 520, 521, 522) for each transmit/receive band, which in particular has a surface wave filter (403, 414, 421; 503, 514, 521), whereby the control signal inputs are each connected to earth (419, 425; 517, 519) using a switching device (416, 423; 515, 516, 522, 524) for the optional connection of the surface wave filters (414, 421) or output matching circuits (515, 522) for one of the transmit/receive bands.

2. Multiband mobile radio terminal according to Claim 1, **characterised by** the design for the transmit/receive bands E-GSM 900, GSM 1800 and GSM 1900.

3. Multiband mobile radio terminal according to one of the preceding claims, **characterised in that** the switching devices (416, 423; 516, 524) take the form of PIN diode circuits.

4. Multiband mobile radio terminal according to Claim 3, **characterised in that** the PIN diode circuits (416, 423) connect the output side of the respective surface wave filter (414, 421) to the receive signal branch in a first control state and to earth (419, 423) in a second control state in such a manner that in the first control state the respective band-selected receive signal is delivered to the common receive signal branch and in the second control state is routed to earth.

5. Multiband mobile radio terminal according to Claim 3, **characterised in that** the PIN diode circuits (515, 516, 522, 524) take the form of switchable output matching circuits (512, 522) which in a first control state deliver the respective band-selected receive signal to the common receive signal branch and in a second control state earth it (517, 519).

6. Multiband mobile radio terminal according to one of the preceding claims, **characterised in that** the input amplifiers and/or sections of an output stage control facility, in particular including couplers, are integrated in the front-end module.

7. Multiband mobile radio terminal with an antenna switching device according to one of the preceding claims, **characterised by** the construction as a front-end module (302; 400; 500) with a control input (314, 315; 418, 426; 518, 523) for switching over one of the receive signal branches between two transmit/receive bands, in particular GSM 1800 and GSM 1900.

8. Multiband mobile radio terminal according to Claim 7, **characterised by** an antenna switch or a diplexer circuit (405/412; 505/512) and an input matching circuit and an output matching circuit (402, 403, 404, 413, 414, 415, 420, 421, 422; 502, 503, 504, 513, 514, 515, 520, 521, 522) for each transmit/receive band, which in particular have a surface wave filter (403, 414, 421; 503, 514, 521).

## Revendications

1. Appareil terminal de radiotéléphonie mobile multibande, notamment téléphone mobile à triple bande, exécuté pour au moins trois bandes d'émission/réception, comprenant un circuit d'entrée et de sortie d'antenne (100 ; 200 ; 300), qui présente un dispositif de commutation d'antenne (302; 400 ; 500) raccordé à une antenne commune (301) et une pluralité de branches de signaux de réception partant de ce dispositif, dans lesquelles est respectivement prévu un amplificateur d'entrée (304, 308) à faible bruit doté d'un circuit d'adaptation d'entrée et/ou de sortie (303, 305, 307, 309), le nombre de branches de signaux de réception, et donc d'amplificateurs d'entrée, étant inférieur au nombre de bandes d'émission/réception pour lesquelles l'appareil terminal de radiotéléphonie mobile multibande est exécuté,
**caractérisé en ce que**
le dispositif de commutation d'antenne (302 ; 400 ; 500) est formé par un module terminal frontal présentant deux entrées de signaux de commande (314, 315 ; 418, 426 ; 518, 523) pour la réception de signaux de commande pour la commutation de l'une des branches de signaux de réception entre deux bandes d'émission/réception, un commutateur d'antenne resp. un circuit diplexeur (405/412 ; 505/512) et respectivement un circuit d'adaptation d'entrée et de sortie (402, 403, 404, 413, 414, 415, 420, 421, 422; 502, 503, 504, 513, 514, 515, 520, 521, 522) pour chaque bande d'émission/réception, qui présente notamment un filtre à ondes acoustiques de surface (403, 414, 421 ; 503, 514, 521), les entrées de signaux de commande étant respectivement raccordées à la masse (419, 425 ; 517, 519) au moyen d'un dispositif de commutation (416, 423 ; 515, 516, 522, 524) pour la connexion en option du filtre à ondes acoustiques de surface (414, 421) ou des circuits d'adaptation de sortie (515, 522) pour l'une des bandes d'émission/réception.

2. Appareil terminal de radiotéléphonie mobile multibande selon la revendication 1,
**caractérisé par**
la conception pour les bandes d'émission/réception E-GSM 900, GSM 1800 et GSM 1900.

3. Appareil terminal de radiotéléphonie mobile multibande selon l'une quelconque des revendications précédentes,
**caractérisé en ce que**,
les dispositifs de commutation (416, 423 ; 516 , 524) sont exécutés comme des circuits à diode PIN.

4. Appareil terminal de radiotéléphonie mobile multibande selon la revendication 3,
**caractérisé en ce que**,
dans un premier état de commande, les circuits à diode PIN (416, 423) connectent le côté sortie du filtre respectif à ondes acoustiques de surface (414, 421) à la branche de signal de réception et, dans un deuxième état de commande, à la masse (419, 423), de telle manière que, dans le premier état de commande, le signal de réception respectif sélectionné par la bande est amené à la branche commune de signaux de réception et qu'il est dérivé contre la masse dans le deuxième état de commande.

5. Appareil terminal de radiotéléphonie mobile multibande selon la revendication 3,
**caractérisé en ce que**,
les circuits à diode PIN (515, 516, 522, 524) sont exécutés comme des circuits d'adaptation de sortie (512, 522) commutables, qui, dans un premier état de commande, amènent le signal de réception respectif sélectionné par la bande à la branche commune de signal de réception et, dans un deuxième état de commande, les dérivent contre la masse (517, 519).

6. Appareil terminal de radiotéléphonie mobile multibande selon l'une quelconque des revendications précédentes,
**caractérisé en ce que**,
les amplificateurs d'entrée et/ou des sections d'une régulation d'étage final, notamment y compris des coupleurs, sont intégrés dans le module terminal frontal.

7. Appareil terminal de radiotéléphonie mobile multibande muni d'un dispositif de commutation d'antenne, selon l'une quelconque des revendications précédentes,
**caractérisé par**
la formation comme module terminal frontal (302 ; 400 ; 500) avec une entrée de commande (314, 315 ; 418, 426 ; 518, 523) pour la commutation de l'une des branches de signaux de réception entre deux bandes d'émission/réception, notamment GSM 1800 et GSM 1900.

8. Appareil terminal de radiotéléphonie mobile multibande selon la revendication 7,
**caractérisé par**
un commutateur d'antenne resp. un circuit diplexeur (405/412 ; 505/512) et respectivement un circuit d'adaptation d'entrée et de sortie (402, 403, 404, 413, 414, 415, 420, 421, 422 ; 502, 503, 504, 513, 514, 515, 520, 521, 522) pour chaque bande d'émission/réception, qui présente notamment un filtre à ondes acoustiques de surface (403, 414, 421 ; 503, 514, 521).
